Europäisches Patentamt

(19) European Patent Office  (11) Publication number: **0 119 230**

Office européen des brevets  **B1**

---

(12) **EUROPEAN PATENT SPECIFICATION**

(45) Date of publication of patent specification: **25.11.87**  (51) Int. Cl.⁴: **F 28 F 9/00**

(21) Application number: **83902913.9**

(22) Date of filing: **08.09.83**

(86) International application number:
**PCT/SE83/00317**

(87) International publication number:
**WO 84/01209 29.03.84 Gazette 84/09**

---

(54) **PLATE HEAT EXCHANGER.**

---

(30) Priority: **14.09.82 SE 8205231**

(43) Date of publication of application:
**26.09.84 Bulletin 84/39**

(45) Publication of the grant of the patent:
**25.11.87 Bulletin 87/48**

(84) Designated Contracting States:
**AT BE CH DE FR GB LI NL SE**

(56) References cited:
**DE-B-2 357 059**
**GB-A- 813 344**
**GB-A-1 079 071**
**SE-A-81 025 108**

(73) Proprietor: **ALFA-LAVAL AB**
**Box 500**
**S-147 00 Tumba (SE)**

(72) Inventor: **JÖNSSON, Nils-Ake**
**La ongdansvägen 5**
**S-245 00 Staffanstorp (SE)**
Inventor: **MOSSBERG, Bengt**
**Warholmsvägen 6 A**
**S-223 65 Lund (SE)**

(74) Representative: **Simpson, Ronald Duncan Innes et al**
**A.A.Thornton & Co. Northumberland House**
**303-306 High Holborn**
**London WCIV 7LE (GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to plate heat exchangers.

A plate heat exchanger comprises a number of heat exchanger plates which are fastened between a pair of end plates, namely a frame plate and a pressure plate. In the frame plate and/or the pressure plate there are inlet ports and outlet ports for the heat exchanging media, and the heat exchange plates have through flow holes in register with each other and with the inlet and outlet ports. Into the inlet ports and outlet ports there are often inserted linings which can be made of different materials. The insertion of such linings can ensure that the frame plate and/or the pressure plate will not come into contact with the heat exchanging medium which can be corrosive, allowing the frame plate and/or the pressure plate to be made of a cheap material. A port lining includes a cylindrical part and at least one but preferably two flanges which are positioned on either side of the end plate to which it is fitted.

The use of conventional linings, however, has involved machining the faces of the end plates around the inlet ports and the outlet ports because the thickness of the flange of the lining located between the end plate and the adjacent heat exchange plate has been so large that without machining to provide recesses around ports to receive the flange, the flange would have meant too great a gap between the end plate and the adjacent heat exchange plate to ensure good support for the heat exchange plate. The machining is both expensive and time consuming.

In GB—A—1041805 there is disclosed a plate heat exchanger including an end plate with a fluid port fitted with a lining made of elastic material. The lining comprises a cylindrical part extending through the port and a radial flange positioned between the end plate and the adjacent heat exchange plate, said flange being formed with an annular bulge directed towards the adjacent heat exchange plate for forming a pressure seal between the end plate and the heat exchange plate. The thickness of the flange and the fact that the bulge abuts the face of the heat exchange plate make it necessary for a recess to be machined in the fact of the end plate around the port to accommodate the flange.

In DE—A—2357059 there is also disclosed a plate heat exchanger with an end plate having a port fitted with a lining of elastic material. Although the drawings imply a plane flange on the lining between the end plate, which is not machined, and the adjacent heat exchange plate, such a construction is not practical. With a relatively thick flange as it is shown proper support for the heat exchange plate by the end plate could not be ensured, but if the flange is made much thinner it will be crushed under the clamping forces which hold the plates together. Therefore, it does not provide a real solution to the problem of having to machine the end plate around the ports.

In accordance with the present invention there is provided a plate heat exchanger comprising a plurality of heat exchange plates secured between a pair of end plates, the said heat exchange plates having through flow holes in register with each other and with a port in one said end plate, and a lining of non-metallic material lining said port, the said lining comprising a cylindrical part extending through the port and having a radial flange positioned between the said end plate and the adjacent heat exchange plate, said flange being formed with an annular bulge directed towards the said adjacent heat exchange plate and forming a pressure seal between the said end plate and the said heat exchange plate, characterised in that said bulge engages sealingly in an annular gasket groove surrounding the hole of the adjacent heat exchange plate, and said flange is so thin that it does not require recessing of the mating face of the end plate.

With a construction in accordance with the invention, the flange can be made thin because it is not subjected to the full clamping pressure. The bulge ensures the seal between the end plate and heat exchange plate and by engaging in a gasket groove in the latter it does not mean too great a gap between the end plate and heat exchange plate so that the end plate need not be machined to provide a recess for the flange.

A full understanding of the invention and its preferred features will be had from the following detailed description given with reference to the accompanying drawings, in which:—

Figure 1 is a section through the end parts of a lining; and

Figures 2a—c disclose different connections between the one flange of the lining and the flange of a connecting tube.

The lining is made of a non-metallic material and comprises a cylindrical part 10 with a flange 11, 12 on each side of the cylindrical part.

The flange 11 that is intended to rest against a heat exchanger plate is so thin that it can be applied on the outside of the side surface of the frame plate or the pressure plate without encroaching materially upon the structural measure of the heat exchanger. This is of extremely great importance, since due to that the usual machining in the form of a recess in the side surface of the frame plate and/or the pressure plate is eliminated.

The flange 11 is formed at its periphery with a part that is thicker than the remaining part of the flange. This thick part comprises a bulge 13 that extends round the flange 11 and functions as a ring gasket for the immediately adjacent heat exchanger plate. In this connection the heat exchanger plates are oriented such that their gasket grooves are directed towards the frame plate. Thus, the bulge or ring gasket 13 engages in the pressed gasket groove of the first heat exchanger plate and functions as a pressure seal between the heat exchanger plate and the frame plate. By this arrangement the flange 11 is locked in radial direction at the same time as the lining is centered in the right position in the hole cut out in the frame plate, which hole for tolerance reasons must be made with a certain excess.

The lining can be provided with an annular disc 14, preferably a sheet made of steel, that rests against and protects the thin flange 11. The plate 14 is provided with a circular opening which essentially corresponds to the hole section of the lining 10.

The plate 14 is kept in place by the fact that its outer part projects in under the bulge 13 and as an extra security measure the plate 14 can be glued or vulcanized on to the flange 11.

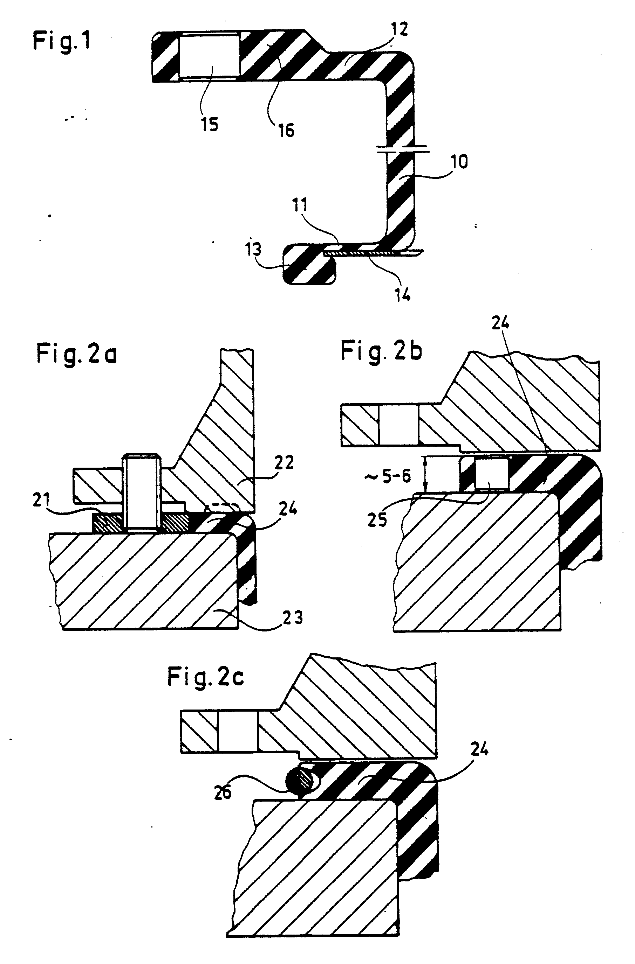

The other flange 12 of the lining 10 is intended to rest against a connecting flange of a connecting tube. In order to prevent that the flange 12 is compressed too much and runs the risk of being crushed during the mounting of the connecting tube, at least one distance means can be applied between the connecting tube flange on one hand and the frame plate and/or the pressure plate on the other hand (see Figures 2a—c).

This distance means may comprise a loose or glued washer 21 on at least some of the pin bolts that connect the connecting tube 22 with the frame plate and/or the pressure plate 23 (Figure 2a). In this case the diameter of the flange gasket 24 has to be co-ordinated with the diameter of the washer such that the distance between means 21 gives the intended effect.

Another distance means may comprise a number of pins 25 inserted in the flange 24. The pins can be applied during the mounting procedure by gluing or with a press fit. Alternatively, the pins can be vulcanized into the rubber. In the embodiment according to Figure 1 the distance means comprises pins 15 fastened in the flange 12.

A third distance means comprises a metal ring 26 that is applied in a groove in the peripheral part of the flange 24. The ring that can be made of round iron, square iron or hexagon iron can be open and resilient or closed. The ring is fastened in the groove of the flange in a suitable way, for instance by means of vulcanization.

In order to make reasonable compression of the outer part 16 of the flange 12 possible this part may have a larger wall thickness than the inner part.

The lining is preferably made of an elastic material, for instance rubber, the two flanges of the lining being made in one piece with the remaining part of the lining.

## Claims

1. A plate heat exchanger comprising a plurality of heat exchange plates secured between a pair of end plates, the said heat exchange plates having through flow holes in register with each other and with a port in one said end plate, and a lining of non-metallic material lining said port, the said lining comprising a cylindrical part (10) extending through the port and having a radial flange (11) positioned between the said end plate and the adjacent heat exchange plate, said flange being formed with an annular bulge (13) directed towards the said adjacent heat exchange plate and forming a pressure seal between the said end plate and the said heat exchange plate, characterised in that said bulge (13) engages sealingly in an annular gasket groove surrounding the hole of the adjacent heat exchange plate, and said flange (11) is so thin that it does not require recessing of the mating face of the end plate.

2. A plate heat exchanger according to claim 1, wherein an annular metal disc (14) having an opening essentially corresponding to the hole section of the lining (10) is fastened to the side of the flange (11) remote from said end plate.

3. A plate heat exchanger according to claim 2, wherein a peripheral part of the plate (14) projects in under the bulge (13).

4. A plate heat exchanger according to claim 1, 2 or 3, wherein the liner includes a flange (12) located on the side of the end plate remote from the heat exchange plates and provided with distance means to limit compression of the flange.

5. A plate heat exchanger according to claim 4, wherein the distance means comprises a washer (21) through which extends a bolt attaching a connecting tube (22) to the end plate (23).

6. A plate heat exchanger according to claim 4, wherein the distance means comprises pins (25) fastened in the flange (12; 24).

7. A plate heat exchanger according to claim 4, wherein the distance means comprises a metal ring (26) positioned in a groove in the peripheral part of the flange (24).

8. A plate heat exchanger according to any one of claims 4 to 7, wherein a part (16) of the flange (12; 24) has a larger wall thickness than another part.

9. A plate heat exchanger according to any one of the preceding claims, wherein the liner is made of rubber.

## Patentansprüche

1. Plattenwärmetauscher mit einer Anzahl von Wärmetauscherplatten, die zwischen Paaren von Endplatten gesichert sind, wobei die Wärmetauscherplatten aufeinander und auf eine Einlaß-/Auslaßöffnung in einer der Endplatten ausgerichtete Durchströmlöcher besitzen, und mit einer Verkleidung aus nichtmetallischem Material zum Verkleiden der Öffnung, wobei die Verkleidung einen zylindrischen Teil (10) aufweist, der sich durch die Öffnung erstreckt und einen radialen Flansch (11) besitzt, der zwischen der Endplatte und der benachbarten Wärmetauscherplatte angeordnet ist, wobei der Flansch mit einer ringförmigen Verdickung (13) ausgebildet ist, die in Richtung auf die benachbarte Wärmetauscherplatte gerichtet ist und eine Druckdichtung zwischen der genannten Endplatte und der genannten Wärmetauscherplatte ausbildet, dadurch gekennzeichnet, daß die Verdickung (13) dichtend in eine ringförmige Dichtungsnut eingreift, die das Loch in der benachbarten Wärmetauscherplatte umgibt, und daß der Flansch (11) so dünn ist, daß er keine Aussparung in der zugeordneten Fläche der Endplatte erfordert.

2. Plattenwärmetauscher nach Anspruch 1, bei dem eine ringförmige Metallscheibe (14), die eine Öffnung im wesentlichen entsprechend dem Lochabschnitt der Verkleidung (10) besitzt, an der Seite des Flansches (11) befestigt ist, die von der Endplatte entfernt liegt.

3. Plattenwärmetauscher nach Anspruch 2, bei dem der Umfangsteil der Platte (14) under die Verdickung (13) vorsteht.

4. Plattenwärmetauscher nach Anspruch 1, 2 oder 3, bei dem die Verkleidung einen Flansch (12) einschließt, der auf der von den Wärmetauscherplatten entfernten Seite der Endplatte angeordnet ist und mit einer Abstandseinrichtung versehen ist, um die Kompression des Flansches zu begrenzen.

5. Plattenwärmetauscher nach Anspruch 4, bei dem die Abstandseinrichtung einer Unterlegscheibe (21) umfaßt, durch die sich ein Bolzen erstreckt, der eine Verbindungsröhre (22) mit der Endplatte (23) verbindet.

6. Plattenwärmetauscher nach Anspruch 4, bei dem die Abstandseinrichtung Stifte (25) umfaßt, die in dem Flansch (12; 24) befestigt sind.

7. Plattenwärmetauscher nach Anspruch 4, bei dem die Abstandseinrichtung einen Metallring (26) umfaßt, der in einer Nut im Umfangsteil des Flansches (24) angeordnet ist.

8. Plattenwärmetauscher nach einem der Ansprüche 4 bis 7, bei dem ein Teil (16) des Flansches (12; 24) eine größere Wanddicke als ein anderer Teil hat.

9. Plattenwärmetauscher nach einem der voranstehenden Ansprüche, bei dem die Verkleidung aus Gummi hergestellt ist.

**Revendications**

1. Echangeur de chaleur à plaques présentant une pluralité de plaques d'échange thermique assujetties entre une paire de plaques extrêmes, lesdites plaques d'échange thermique étant percées de trous de circulation traversante qui sont alignés les uns avec les autres avec un orifice pratiqué dans l'une desdites plaques extrêmes, ainsi qu'un revêtement en un matériau non métallique qui garnit ledit orifice, ce revêtement consistant en une partie cylindrique (10) qui s'étend par l'orifice et comporte une aile radiale (11) interposée entre ladite plaque extrême et la plaque adjacente d'échange thermique, ladite aile étant munie d'un renflement annulaire (13) dirigé vers ladite plaque adjacente d'échange thermique et formant un joint de pression entre ladite plaque extrême et ladite plaque d'échange thermique, caractérisé par le fait que ledit renflement (13) s'engage de manière étanche dans une gorge pour garniture annulaire entourant le trou de la plaque adjacente d'échange thermique, ladite aile (11) étant suffisamment mince pour ne pas exiger un évidement de la face complémentaire de la plaque extrême.

2. Echangeur de chaleur à plaques selon la revendication 1, dans lequel un disque annulaire métallique (14), percé d'une ouverture correspondant sensiblement à la section du trou du revêtement (10), est assujetti au côté de l'aile (11) éloigné de ladite plaque extrême.

3. Echangeur de chaleur à plaques selon la revendication 2, dans lequel une région périphérique de la plaque (14) dépasse vers l'intérieur audessous du renflement (13).

4. Echangeur de chaleur à plaques selon la revendication 1, 2 ou 3, dans lequel le revêtement présente une aile (12) située du côté de la plaque extrême éloigné des plaques d'échange thermique, et munie d'un moyen d'espacement pour limiter la compression de cette aile.

5. Echangeur de chaleur à plaques selon la revendication 4, dans lequel le moyen d'espacement consiste en une rondelle (21) traversée par une cheville solidarisant un tube de jonction (22) à la plaque extrême (23).

6. Echangeur de chaleur à plaques selon la revendication 4, dans lequel le moyen d'espacement consiste en des tenons (25) assujettis dans l'aile (12; 24).

7. Echangeur de chaleur à plaques selon la revendication 4, dans lequel le moyen d'espacement consiste en une bague métallique (26) logée dans une gorge pratiquée dans la région périphérique de l'aile (24).

8. Echangeur de chaleur à plaques selon l'une quelconque des revendications 4 à 7, dans lequel une région (16) de l'aile (12; 24) présente une plus grande épaisseur de paroi qu'une autre région.

9. Echangeur de chaleur à plaques selon l'une quelconque des revendications précédentes, dans lequel le revêtement est fabriqué en caoutchouc.

0 119 230

Fig.1

Fig.2a

Fig.2b

Fig.2c

~5-6

1